# EUROPEAN PATENT APPLICATION

(11) **EP 1 544 727 A1**
(43) Date of publication of application: **22.06.2005**
(21) Application number: 02771992.1
(22) Date of filing: 27.09.2002
(51) Int. Cl.: G06F 9/00, H03K 17/00

(54) **A TOUCH CONTROL DISPLAY SCREEN APPARATUS WITH A BUILT-IN ELECTROMAGNET INDUCTION LAYER OF CONDUCTOR GRIDS**

(30) Priority: 16.09.2002 CN 02257334
(71) Applicant: Tai Guen Enterprise Co.,Ltd, Chungli, Taoyuan Hsien (CN); Shi, Xuanming, Chungli, Taoyuan Hsien (CN)
(72) Inventor: SHI, Xuanming, Chungli, Taoyuan Hsien, Taiwan (CN)
(74) Representative: Tomlinson, Edward James
(86) International application number: PCT/CN2002/000688
(87) International publication number: WO 2004/025455

(57) **Abstract**

A touch control display screen with a built-in electromagnetic induction layer of wire lattice includes at least a display screen and a housing. An induction layer is provided behind the display screen and is connected to the induction collection control circuit by its output. A control circuit of display screen is provided in the housing. The induction layer is a wire lattice winded and interlaced separately by the wires along the X and Y axes. The wires are insulated with each other at the crossing points. The space within each lattice unit constitutes one induction cell. Because the electromagnetic induction layer is placed behind the display screen and a printed electromagnetic induction antenna array with flexible membrane is adopted as a recognition induction element, it is easy to manufacture and the cost is low, also the greater the surface area, the more prominent the cost advantage is over the existing technology. Its precision of recognition is high, and it is capable of accurately inputting mouse signals or pen track signals by means of pen touch or finger touch; and as a touch screen, a protective film is provided on the surface of the display screen, and it is not easy to cause physical damage, therefore the operating life is long.

## Description

### Technical Field

The present invention relates to a touch screen, particularly to a touch control display screen with a built-in electromagnetic induction layer of wire lattice. The present invention belongs to the field of electronics and electrical appliance technologies.

### Background Art

As a consequence of the popularization and application of computer technology, the ways for converting information into electronic and digital forms are becoming more and more abundant. People have invented all kinds of methods for completing the initial process of digitization of information using various computer peripheral equipments. For example, various keyboard input methods, speech recording input, graphics collection, etc., the most effective and most convenient way is to perform input of information or command directly on a display screen by a method such as touching and pointing. For example, when making drawings by computer, the operation by mouse cannot be as dexterous as the operation by pen, it inevitably obstructs people from skillfully completing fine pattern production. By adopting touch screen and directly operating on the display screen by a touch control pen, the operation is just like drawing on paper, therefore the entire work is very easy to complete, and the effect is relatively good. Also, as a consequence of continuous promotion of portable products, the various peripheral equipments such as keyboard and mouse are all being omitted. For example, the PDA does not have key operation basically, but it entirely uses touch control pen to complete the various operations of a touch screen.

The existing touch control panel mainly uses an electrical resistance type method. In a concrete configuration thereof, a transparent touch membrane is provided on the out side of the display screen, the touch membrane is coated on the surface by an electrical resistance layer ; when an operation indicates a specific location on the touch membrane, the change of electrical potential of the location is acquired through computation by a subsequently connected recognition and control circuit, and determines the coordinates of the indicated location, whereby the corresponding operation is executed. Because the existing electrical resistance type has problems such as high cost, complex technique, low precision, and unsuitability for performing handwriting input when realizing large-dimensional touch control panels, and because many times of operation causes physical damages like wear, which leads to problems of shortened operating life of the touch membrane, the applications of the touch screen are greatly limited.

### Summary of the invention

The object of the invention is to overcome the various disadvantages of the technology described above, and to provide a touch control display screen with a built-in electromagnetic induction layer of wire lattice having simple manufacturing technique, low cost, high precision of recognition and collection, and long operating life.

The object of the present invention is achieved by the following technical solutions:

A touch control display screen with a built-in electromagnetic induction layer of wire lattice includes at least a display screen and a housing. An induction layer is provided behind the display screen and is connected to the induction collection control circuit by its output. A control circuit of the display screen is provided in the housing. The said induction layer may be a wire lattice winded and interlaced by the wires along the X and Y axes. The wires are insulated with each other at the crossing points. The space within each lattice unit constitutes one induction cell.

The area of said induction layer is same as or smaller than those of the display screen, that is, the induction layer is entirely or partially attached on the rear of the display screen. The induction layer is positioned at one side or center of the display scope of the display screen.

A shield layer is provided behind the induction layer in order to enhance the anti-interference ability of the device.

A buffering layer is provided between the induction layer and the shield layer.

A spatial gap is kept between the shield layer and the control circuit of the display screen.

The induction layer is a wire lattice winded and interlaced by the wires along the X and Y axes, and the surface of the wires is wholly covered or coated by an insulated layer. Alternatively, the wires are enameled wires.

In order to position the winding wire lattice strictly, the wire lattice is attached and fixed on the insulated membrane by thermal pressing or thermal melting process, so as to form the wire lattice electromagnetic induction layer with an insulated membrane. The insulated membrane is film material so as to lower the cost.

In order to improve the induction precision of the induction layer, more than one induction layer are overlaid together, and the induction cells on respective induction layers are set to interlace each other. The interval sizes of the said induction cells on respective layers are same or different.

The induction control circuit and the induction layer are integrated by direct connection, the components of the induction control circuit are positioned on the output of the wire lattice, and the induction control circuit is positioned in the housing.

The said components of the induction control circuit also are mounted on a printed circuit board, which is separated from the induction layer; the output of the wire lattice of the induction layer is connected to the corresponding input terminal on the printed circuit board by means of pressure-connection, plug-in connection or welding connection.

The said output of the wire lattice of the induction layer is positioned between a hard sheet and a printed circuit board. A buffering layer is positioned between the hard sheet and the output of the wire lattice. The hard sheet, buffering layer and the output of the wire lattice are overlaid on the printed circuit board by means of the screwing and

pressing connection. The output of the wire lattice is connected to the corresponding input terminal on the printed circuit board.

The printed circuit board is the printed circuit board of the control circuit of the display screen inside the body of the display screen.

The printed circuit board is the printed circuit board of the control circuit of the display screen positioned outside the body of the display screen; or can be the individual device or set on the main board of the PC, and they are connected each other by cables.

The induction control circuit can be positioned outside the body, and connected to the body through the electrical connection means. The output of the wire lattice of the induction layer is connected with the output interface of the induction layer by means of pressure-connection, plug-in connection or welding-connection. On the control circuit, an interface that can match the electrical connection means of the induction layer is provided.

The output interface of the induction layer and the interface of the control circuit is one of the following connection types: pin-type connection means, flexible printed circuit means, PIN-PIN connection means, welding spot (VGA) thermal-melted connection means, ultrasonic welding device, solder-plate welding device or puncture-type connection means.

The said display screen is plasma panel or LCD, and there is provided a protective layer on the front surface of the display screen.

According to the technical solutions described above, it is known that the present invention has advantages as the following:
1. Because the electromagnetic induction layer is placed behind the display screen and a wire lattice interlaced by the wires along the X and Y axial directions is adopted as a recognition induction element, it is easy to manufacture and the cost is low, also the greater the surface area, the more prominent the cost advantage is over the existing technology.
2. Because an electromagnetic induction wire lattice is adopted as a recognition induction element, its precision of recognition is high, and it is capable of accurately inputting mouse signals or pen track signals by means of pen touch or finger touch.
3. Signal generation is produced by means of an electromagnetic induction layer situated behind the display screen, and as a touch screen, a protective film is placed on the surface of the display screen, and it is not easy to cause physical damage, therefore the operating life is long.

### Description of figures

Fig.1 is a diagram showing the structure of an embodiment according to the present invention.
Fig.2 is a diagram showing the structure of another embodiment according to the present invention.
Fig.3 is a diagram showing the X and Y axial direction wire eduction means of the induction layer according to the present invention.
Fig.4 is a diagram showing the wires winded along Y axis of the induction layer according to the present invention.
Fig.5 is a diagram showing the wires winded along X axis of the induction layer according to the present invention.
Fig.6 is a diagram showing the whole structure of the induction cell formed by the wire lattice winded by the wires according to the present invention.
Fig .7 is a diagram showing the structure of two induction layers overlaid together according to the present invention.
Fig.8 is a diagram showing the connection between the induction layer and the induction control circuit that are separated according to the present invention.
Fig.9 is a diagram showing the principle of the generation of the induction signal and the location identification of the input touch according to the present invention.
Fig.10 is a diagram showing the connection between the output of the wire lattice and the corresponding input terminal of the printed circuit board or the means of electric connection according to the present invention.
Fig.11 is a structural diagram showing the recognition circuit according to the present invention.

### Mode of carrying out the invention

The present invention will be explained in detail with reference to the drawings and embodiments.

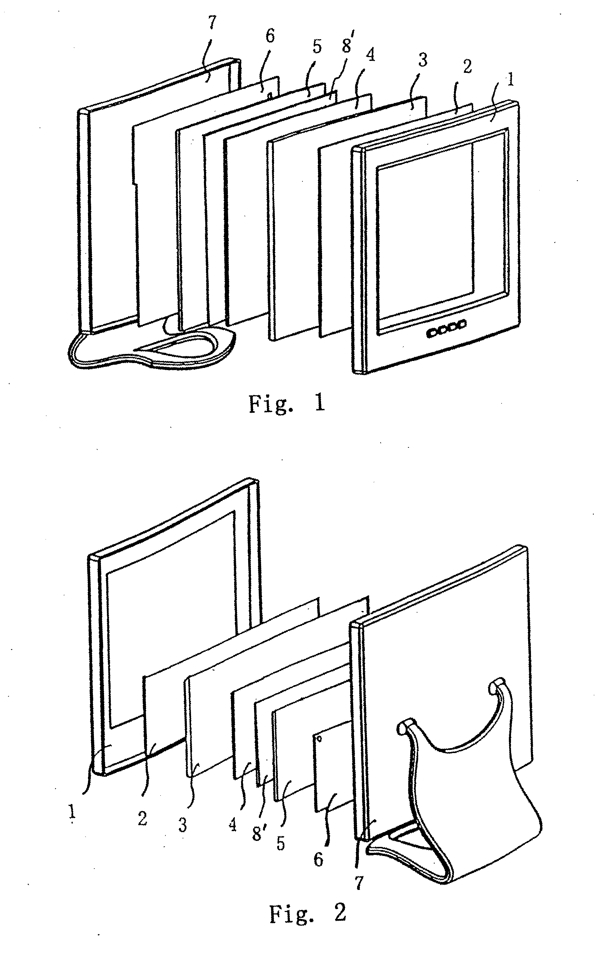

As shown in Fig.1, a touch control display screen with a built-in electromagnetic induction layer of wire lattice according to the invention includes: a display screen 3 and a housing 1,7 at least, an induction layer 4 is provided behind the display screen 3 and is connected to the induction collection control circuit by its output. A control circuit of the display screen is provided in the housing 1 and 7. The display screen 3 is a flat panel display screen such as plasma panel or LCD.

A characteristic point of the present invention is that the induction layer 4 is placed behind the display screen 3, and after the electromagnetic handwriting operation pen touches and presses the display screen 3, the induction layer 4 still can respond to the position contacted on the handwriting table through the display screen. In a concrete structural design, the surface area of the induction layer 4 is the same size as the surface area of the display screen 3. A shielding layer 5 is provided behind the induction layer 4, and a recognition circuit layer 6 is provided behind the shielding layer 5. The shielding layer 5 respectively insulates and shields between the induction layer 4 and the recognition circuit layer 6. Of course, the shielding layer 5 and the recognition circuit layer 6 may be separately placed in another space in the display screen or main unit. However, an entire induction device can be integrated by placing the insulating shielding isolating layer 5, the recognition circuit layer 6, and the touch control induction layer 4 affixed together. In order to further ensure the shielding effect, a spatial gap is provided between the shielding layer 5 and the recognition circuit layer 6. Of course, if a spatial gap is retained between the shielding layer 5 and the induction layer 6, there is already an insulating effect, and that shielding layer 5 itself may be a material not having an insulating layer. The shielding layer 5 is used for enhancing the anti-interference capability of the equipment.

Moreover, in order to increase the capabilities of wear resistance, and the like, of the surface of the display screen 3, a transparent protective layer or protective film 2 is provided on the front surface of the display screen 3.

A buffering layer 8' is provided between the induction layer 4 and the shielding layer 5, or a buffering layer 8' is provided between the induction layer 4 and the shield layer 5. The buffering layer 8' is used to keep a reasonable space between the induction layer 4 and the shield layer 5. Furthermore, the electromagnetic signal is transmitted from the pen in the both cases that the pen is pressed down and the pen is not pressed down, so as to control conveniently. Certainly, in a modification of the invention, the electromagnetic signal is not transmitted in the case that the pen is not pressed down. Furthermore, the pen can be provided with pressure induction means in order to sense the pressure by using different frequency.

As shown in Fig. 2, according to different requirements, such as when a part of the display screen 3 is made as a touch input or touch operation area, the induction layer 4 may have a smaller surface area than the surface area of the display screen 3 and be placed on one side behind the display screen 3, and it also may be placed on two sides or four sides of the display screen 3. Of course, the induction layer 4 may have a larger surface area than the surface area of the display screen 3, such that the entire display screen 3 and the periphery of the display screen 3 may have touch control capability.

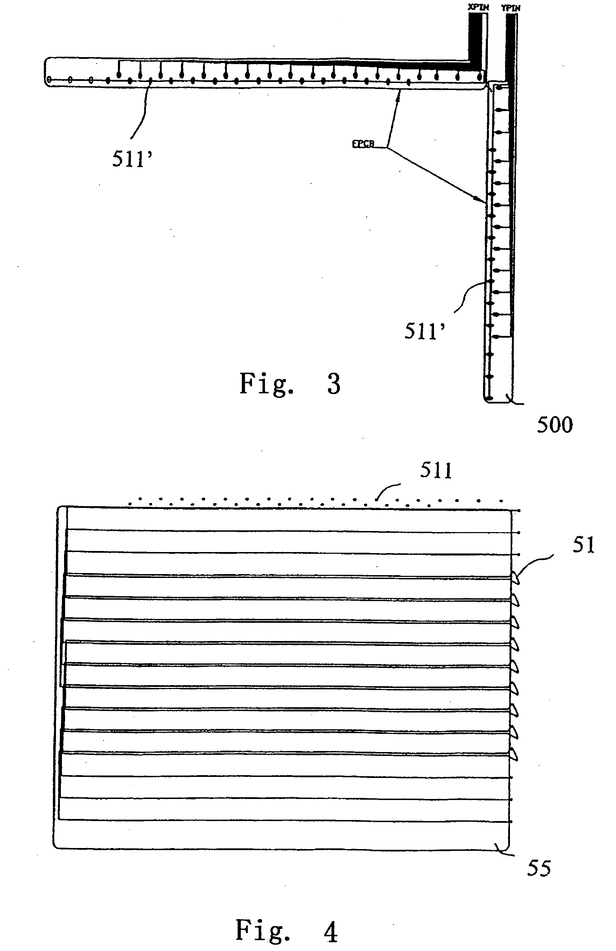

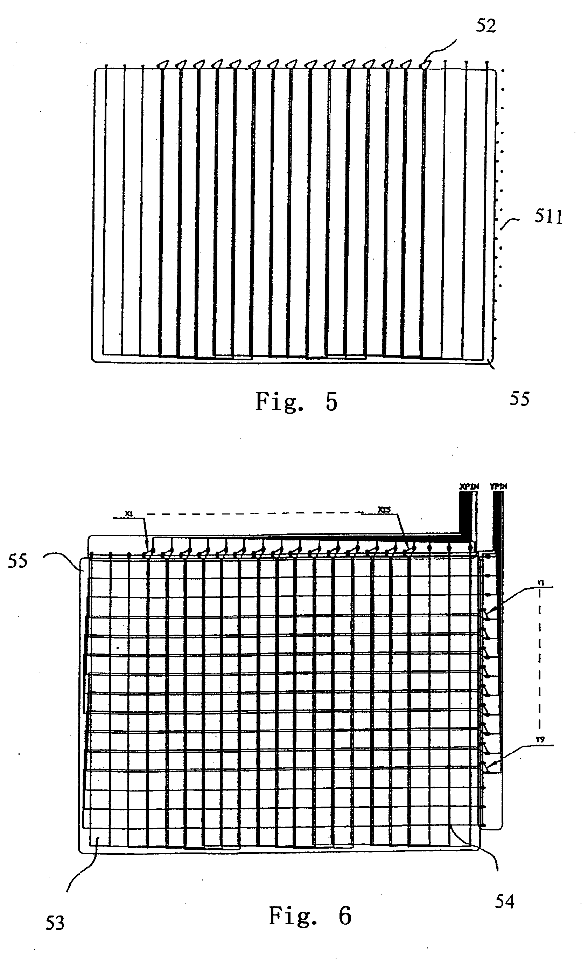

As shown in Figs 3, 4, 5 and 6, the induction layer 5 may be a wire lattice winded and interlaced by the wires 52 along the X axis and the wires 51 along the Y axis, the wires are insulated with each other at the crossing points 54. The space enclosed by each lattice unit constitutes one induction cell 53. There can be position reference columns 511 while winding. The surface of the wires is wholly covered or coated by an insulated layer. Alternatively, the enameled wires along the X and Y axes can wind the wire lattice.

In order to position the winded wire lattice strictly, for the subsequent technique and maintenance the wire lattice can be attached and fixed on the insulated membrane 55 by thermal pressing or thermal melting process, so as to form the wire lattice electromagnetic induction layer with an insulated membrane 55. The insulated membrane is film material.

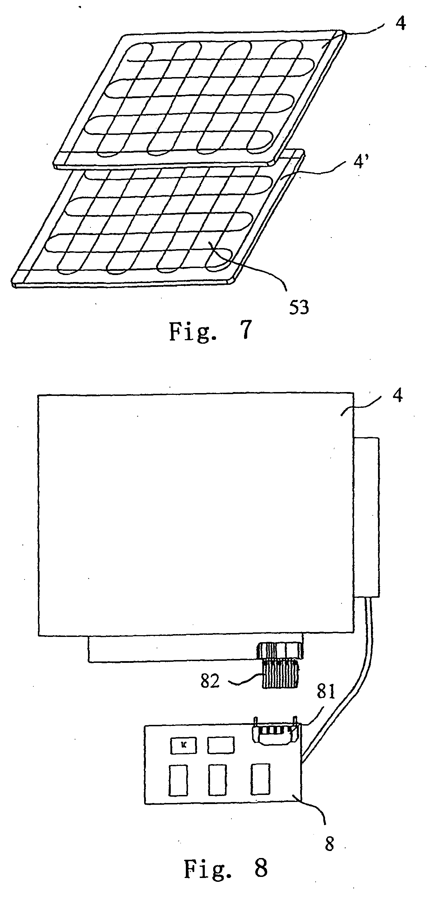

As shown in Fig 7, more than one induction layer 5 and 5' are overlaid together and the induction cells 53 on respective induction layers are set to interlace each other, so as to improve the accuracy of the touch display screen. The interval sizes of the said induction cells 53 on respective layers may be same or different. After the induction layers that each layer has different interval size of the induction cells 53 are overlaid together, the scale unit of the coordinates is consequentially shorten, so the accuracy of induction is improved. In the case that the induction layers having same size of the induction cells 53 are overlaid together, because the induction cells 53 on different induction layers are set to interlace each other, the scale unit of the coordinates can also be shorten, and so the sensitivity of the touch display screen is improved.

The induction collection control circuit of the induction layer 4 and the output of the wire lattice of the induction layer are integrated by direct connection, the components of the induction collection control circuit are positioned on the output of the wire lattice, and the induction collection control circuit is positioned in the housing. For example, when the flexible printed circuit (FPC) wire lattice is used, they are integrated. The wire lattice and the induction collection printed circuit are etched at one time, and the control elements are provided thereon, so as to improve the manufacture efficiency and adapt for industrialized production.

The said components of the induction collection control circuit can also be mounted on a printed circuit board that is separated from the induction layer 4; the output of the wire lattice of the induction layer is connected to the corresponding input terminal on the printed circuit board by means of pressure-connection, plug-in connection or welding connection.

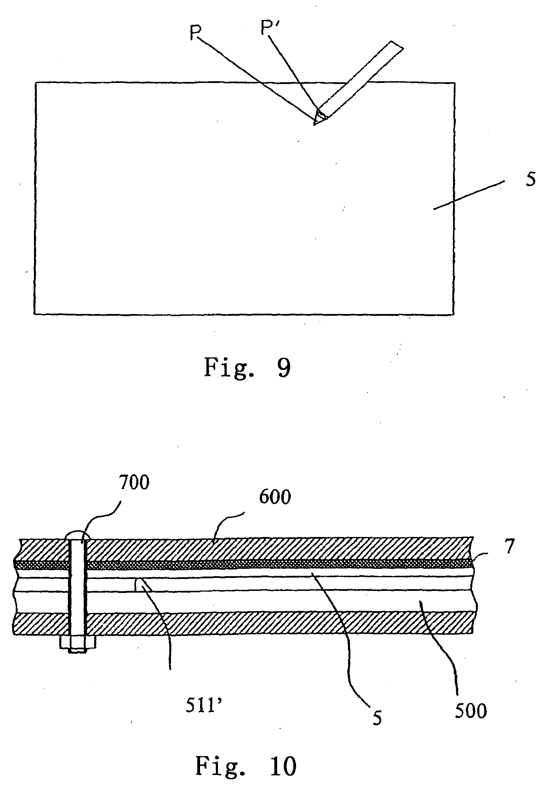

As shown in Fig 10, the output of the wire lattice of the induction layer 4 is positioned between a hard sheet 600 and a printed circuit board 500. A buffering layer 7 is positioned between the hard sheet 600 and the output of the wire lattice. The hard sheet 600, buffering layer 7 and the output of the wire lattice are overlaid on the printed circuit board 500 by means of the screwing and pressing connection 700. The output of the wire lattice is connected with corresponding input terminal 511' on the printed circuit board 500.

The printed circuit board may be a printed circuit board of the control circuit of the display screen inside the body of the display screen, so as to integrate the control elements, reduce the components and lower the cost.

As shown in Fig 8, the components of the induction collection control circuit may be positioned on the printed circuit board 8 that is separated from the induction layer 4 and integrated with the control circuit of the display screen, and of course be positioned outside the display screen body like PC. The output 82 of the wire lattice of the induction layer is connected with the input eduction terminal 81 of the printed circuit board by means of pressure-connection, plug-in connection or welding-connection. The connection can be achieved with existing usual standard interfaces, for example, the output interface 82 of the induction layer and the interface 81 of the control circuit may be one of the following connection types: pin-type connection means, flexible printed circuit means, PIN-PIN connection means, welding spot (VGA) thermal-melted connection means, ultrasonic welding device, solder-plate welding device and puncture-type connection means.

The operation mechanism of the present invention is as shown in Fig 9. In Fig 9, P is the signal input terminal of the pen, and there is a bigger conductor P' on the head of the pen, the electromagnetic pen transmits electromagnetic signal continuously. When the pen-point touches the induction generation device, said electromagnetic signal passes through the induction antenna at the corresponding location, and then the antenna at the location induces a signal. The location signal induced by the induction generation device is transferred to the input terminal of the control identification circuit through the wire along X, Y axes. After array selecting, control process, band-pass filtering, detection rectification and A/D conversion, the resultant location signal is transferred to the processing circuit and calculated by the CPU, so as to determine the location coordinates of the electromagnetic signal on the induction antenna and various operation statuses. Above data or information is sent to a computer through communication interfaces, thereby to control the computer to identify, display, record and so on.

Furthermore, in order to obtain the pressure of pen-point while writing and to improve the induction accuracy of the location signal, a Z-axis directional pressure sensor is provided in the tail of the pen-point, and the output of the sensor is connected to the control terminal of the electromagnetic wave generation device, so the transmitted electromagnetic wave signal can be changed by means of pressure-touching, thereby the pressure (input signal) of the pen-point can be identified more reliably. The position of the pen can be determined according to the plane coordinate of the position of the pen.

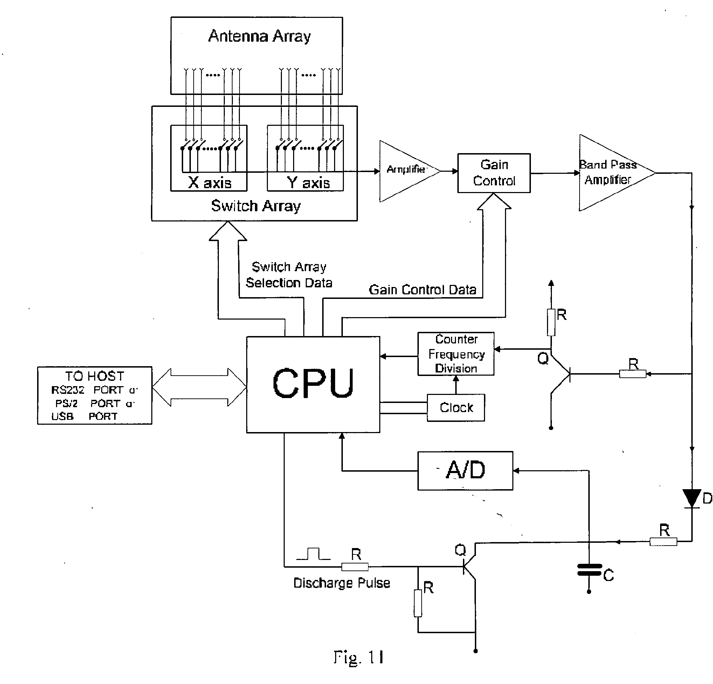

As shown in Fig 11, the induced electromagnetic signal source is the electromagnetic operation pen, the electromagnetic handwriting operation pen transmits constant frequency or data electromagnetic signal continuously in the course of normally. After the pen-point is pressed, touches the, the electromagnetic signal of the induction generation device passing through the wire lattice, the bottom of the horizontal antennas and the top of the vertical antennas at the location corresponding to the center or around area of the electromagnetic signal source induce the electromagnetic signal. The electromagnetic signal induced is transferred to CPU through the interface of the recognition circuit. The CPU calculates the positions of the induction antennas, the intensity of the voltage and the varies of the frequency signal so as to determine the position of the electromagnetic signal source and various operation statuses, the results above are transferred to CPU so as to control the computer to achieve various commands, such as character or shape identification, drawing or shortcut key transferring.

The electromagnetic pen transmits electromagnetic signal continuously. When the pen-point touches the induction generation device, said electromagnetic signal passes through the induction antenna at the corresponding location, and then the antenna at this location induces a signal. The location signal induced by the induction generation device is transferred to the input terminal of the control identification circuit through the wires along the X, Y axes. After array selecting, control process, band-pass filtering, detection rectification and A/D conversion, the resultant location signal is transferred to the processing circuit and calculated by the CPU, so as to determine the location coordinates of the electromagnetic signal on the induction antenna and various operation statuses. Above data or information is sent to a computer through communication interfaces, thereby to control the computer to identify, display, record and so on.

Furthermore, in order to obtain the pressure of pen-point as writing and to improve the induction accuracy of the location signal, a Z-axis directional pressure sensor is provided in the tail of the pen-point, and the output of the sensor is connected to the control terminal of the electromagnetic wave generation device, so the transmitted electromagnetic wave signal can be changed by means of pressure-touching, thereby the pressure (input signal) of the pen-point can be identified more reliably.

The present invention can be widely used in all kinds of touch control equipments. At the same time, the concept of the invention is by no means limited to combining an electromagnetic induction layer and a flat panel display screen, and electromagnetic induction layers can be combined behind non-CRT display screens such as plasma display screens and liquid crystal display screens having all kinds of shapes that are not at all flat so as to achieve a low cost touch screen structure.

Above embodiments are used only to explain the present invention, but not to limit the present invention. In despite of the detailed description of the present invention with referring to above preferred embodiments, it should be understood that various modifications, changes or equivalent replacements can be made by those skilled in the art without departing from the spirit and scope of the present invention. All of the modifications, changes or equivalent replacements should be covered in the append claims of the application.

## Claims

1. A touch control display screen with a built-in electromagnetic induction layer of wire lattice, comprising at least a display screen and a housing; the induction layer being provided behind the display screen and connected to the induction collection control circuit by its output; a control circuit of display screen being provided in the housing, **characterized in that** the said induction layer is a wire lattice winded and interlaced separately by wires along the X and Y axes, the wires are insulated with each other at the crossing points, and the space within each lattice unit constitutes one induction cell.

2. The touch control display screen with a built-in electromagnetic induction layer of wire lattice according to claim 1, wherein the area of said induction layer is same as or smaller than that of the display screen, i.e. the induction layer is attached entirely or partially to the rear surface of the display screen.

3. The touch control display screen with a built-in electromagnetic induction layer of wire lattice according to claim 2, wherein the induction layer which is smaller than the area of the display screen is positioned at one side or in the center of the displaying scope of the display screen.

4. The touch control display screen with a built-in electromagnetic induction layer of wire lattice according to claim 1, wherein a shield layer is provided behind the induction layer in order to enhance the anti-interference ability of the device.

5. The touch control display screen with a built-in electromagnetic induction layer of wire lattice according to claim 4, wherein a buffering layer is provided between the induction layer and the shielding layer.

6. The touch control display screen with a built-in electromagnetic induction layer of wire lattice according to claim 4 or 5, wherein a spatial gap is kept between the shield layer and the control circuit of display screen.

7. The touch control display screen with a built-in electromagnetic induction layer of wire lattice according to claim 1, wherein the surface of the wires is wholly covered or coated by an insulated layer.

8. The touch control display screen with a built-in electromagnetic induction layer of wire lattice according to claim 7, wherein the wires are enameled wires.

9. The touch control display screen with a built-in electromagnetic induction layer of wire lattice according to claim 1,2,3 , 4 , 5 , 7 or 8, wherein more than one induction layer are overlaid together , and the induction cells on respective induction layer are set to interlace each other.

10. The touch control display screen with a built-in electromagnetic induction layer of wire lattice according to claim 9, wherein the interval sizes of the said induction cells on respective layer are same or different.

11. The touch control display screen with a built-in electromagnetic induction layer of wire lattice according to claim 1,2 , 3, 4 , 5 ,7 or 8, wherein the wire lattice is attached and fixed on an insulated membrane by thermal pressing or thermal melting process, so as to form the electromagnetic induction layer with the insulated membrane.

12. The touch control display screen with a built-in electromagnetic induction layer of wire lattice according to claim 11, wherein the insulated membrane is film material.

13. The touch control display screen with a built-in electromagnetic induction layer of wire lattice according to claim 11, wherein more than one induction layer are overlaid together , and the induction cells on respective induction layers are set to interlace each other.

14. The touch control display screen with a built-in electromagnetic induction layer of wire lattice according to claim 11, wherein the interval sizes of the said induction cells on respective layer are same or different.

15. The touch control display screen with a built-in electromagnetic induction layer of wire lattice according to claim 1,2 ,3, 4 , 5 ,7 or 8, wherein the induction control circuit and the induction layer are integrated by direct connection, the components of the induction control circuit are directly positioned on the output of the wire lattice, and the induction control circuit is positioned in the housing.

16. The touch control display screen with a built-in electromagnetic induction layer of wire lattice according to claim 1, 2 ,3 , 4 , 5 ,7 or 8, wherein the said components of the induction control circuit are mounted on a printed circuit board that is separated from the induction layer; the output of the wire lattice of the induction layer is connected to the corresponding input terminal on the printed circuit board by means of pressure-connection, plug-in connection or welding connection.

17. The touch control display screen with a built-in electromagnetic induction layer of wire lattice according to claim 16, wherein the said output of the wire lattice of the induction layer is positioned between a hard sheet and the printed circuit board; a buffering layer is positioned between the hard sheet and the output of the wire lattice; the hard sheet, the buffering layer and the output of the wire lattice are overlaid on the printed circuit board by means of the screwing and pressing connection; and the output of the wire lattice is connected to the corresponding input terminal on the printed circuit board.

18. The touch control display screen with a built-in electromagnetic induction layer of wire lattice according to claim 1, 2, 3 , 4 , 5 ,7 or 8, wherein the printed circuit board is the printed circuit board of display screen control circuit inside the body of the display screen.

19. The touch control display screen with a built-in electromagnetic induction layer of wire lattice according to claim 1, 2 , 3, 4,5,7 or 8, wherein the printed circuit board is a printed circuit board of display screen control circuit positioned outside the body of the display screen, or is a individual device or is set on the main board of the PC, and they are connected each other by cables.

20. The touch control display screen with a built-in electromagnetic induction layer of wire lattice according to claim 19, wherein the induction control circuit is positioned outside the body and connected to the body through the electrical connection means; the output of the wire lattice of the induction layer is connected with the output interface of the induction layer by means of pressure-connection, plug-in connection or welding-connection; and an interface matching the electrical connection means of the induction layer is provided on the control circuit.

21. The touch control display screen with a built-in electromagnetic induction layer of wire lattice according to claim 20, wherein the output interface of the induction layer and the interface of the control circuit are one of the following connection types: pin-type connection means, flexible printed circuit means, PIN-PIN connection means, welding spot (VGA) thermal-melted connection means, ultrasonic welding device, solder-plate welding device, or puncture-type connection means.

22. The touch control display screen with a built-in electromagnetic induction layer of wire lattice according to claim 1 , 2 or 3, wherein a protective layer is provided on the front surface of the display screen.

23. The touch control display screen with a built-in electromagnetic induction layer of wire lattice according to claim 1 , 2 or 3, wherein the said display screen is plasma panel or LCD.
